# EUROPÄISCHE PATENTANMELDUNG

(11) **EP 2 216 106 A2**
(43) Veröffentlichungstag der Anmeldung: **11.08.2010**
(21) Anmeldenummer: 10405025.7
(22) Anmeldetag: 10.02.2010
(51) Int. Cl.: B08B 9/093, B08B 15/02, B65G 69/18, B08B 9/00, B08B 9/08

(54) **Verfahren zur Durchführung eines Reinigungszyklus an einer Prozessanlage und Vorrichtung dazu**

(30) Priorität: 10.02.2009 CH 199092009
(71) Anmelder: Rubitec AG, 4431 Bennwil (CH)
(72) Erfinder: Rubitschung, Christoph, 4432 Lampenberg (CH)
(74) Vertreter: Ullrich, Gerhard

(57) **Zusammenfassung**

Das Verfahren betrifft die Durchführung eines Reinigungszyklus an einer Prozessanlage **(1).** Ein Ausgang **(9)** der Prozessanlage **(1)** mündet in eine nächste Anlagenkomponente **(3)** ein, an der ein folienartiger, schlauchförmiger Endlosliner **(4)** bevorratet ist. Die nächste Anlagenkomponente **(3)** hat einen Auslauf **(322),** an dem Behandlungsgut während des laufenden Anlagenbetriebs in einen Nutzabschnitt **(40)** des Endlosliners **(4)** eintritt und durch den Nutzabschnitt **(40)** weitergeleitet wird. Nach abgestelltem Anlagenbetrieb wird das Innere der nächsten Anlagenkomponente **(3)** in einem Spülgang gereinigt und das verschmutzte Spülmittel über den Nutzabschnitt **(40)** einer Entsorgungseinheit **(8)** zugeführt. Der Nutzabschnitt **(40)** wird temporär durch eine der nächsten Anlagenkomponente **(3)** nachgeschaltete Armatur **(5)** mit einem Verschlusselement **(52)** geführt. Das Verschlusselement **(52)** wird vor dem Start des Spülgangs geschlossen, womit der Durchgang durch den Nutzabschnitt **(40)** gesperrt ist. Während des Spülgangs ist das Verschlusselement **(52)** geöffnet, so dass freier Durchgang durch den Nutzabschnitt **(40)** besteht. Nach dem Spülgang wird das Verschlusselement **(52)** zeitweise wieder geschlossen. Ferner werden die zur Durchführung des Reinigungsverfahrens geeigneten Vorrichtungskomponenten angegeben.

## Beschreibung

### Anwendungsgebiet der Erfindung

Die vorliegende Erfindung betrifft ein Verfahren zur Durchführung eines Reinigungszyklus an einer Prozessanlage als sogenanntes CIP-Reinigungsverfahren (= Cleaning in Place). Beim CIP-Reinigungsverfahren, das zumeist auf einem Spülgang beruht, wird die Anlage ohne wesentliche Demontage auf ihren produktberührten Flächen gereinigt. Ein Ausgang der Prozessanlage mündet in eine als Abfüllstation beschaffene nächste Anlagenkomponente ein, an der ein folienartiger, schlauchförmiger Endlosliner bevorratet ist. Die nächste Anlagenkomponente hat einen Auslauf, an dem Behandlungsgut während des laufenden Anlagenbetriebs in einen Nutzabschnitt des Endlosliners eintritt und durch den Nutzabschnitt zu einer weiteren Anlagenkomponente, vorrangig ein Behälter, geleitet wird. Im Behälter dient ein vom Endlosliner gebildeter staubdichter Sack zur Lagerung des aus der Prozessanlage abgefüllten Behandlungsguts. Nach abgestelltem Anlagenbetrieb wird das Innere der nächsten Anlagenkomponente in einem Spülgang gereinigt und das verschmutzte Spülmittel über den Nutzabschnitt einer Entsorgungseinheit zugeführt. Ein weiterer Gegenstand der Erfindung ist die zur Durchführung des Verfahrens benutze Vorrichtung.

### Stand der Technik

An den hier relevanten Prozessanlagen wird ein auf einem Abfüllkopf bevorrateter Endlosliner benutzt, um Behandlungsgut in mit dem Endlosliner gebildete Säcke abzufüllen. Das bisher für solche Anlagen angewendete Reinigungsverfahren - zumeist nach einem Abfüllvorgang oder vor einem Füllgutwechsel durchgeführt - beruht auf einer Spülung des Inneren des Abfüllkopfes und des Nutzabschnittes des Endlosliners, wobei man das verschmutzte Spülmittel einer Entsorgungseinheit zuführt. Dazu ist es erforderlich, am Nutzabschnitt angebrachte Abbindungen zu öffnen, so dass der mit Partikeln des Füllguts quasi belastete Innenraum des Abfüllkopfes und der mit solchen Partikeln innenseitig beschichtete Nutzabschnitt gegenüber der äusseren Umgebung zumindest kurzzeitig offen ist. Bei toxischen Füllgütern ist eine solche Öffnung zur äusseren Umgebung mit den gestiegenen Sicherheitserfordernissen nicht vereinbar. Umgekehrt darf bei sehr sensiblen Füllgütern keinerlei Verunreinigung aus der äusseren Atmosphäre an das Füllgut, das davon durchströmte Volumen und die durchflossenen Flächen gelangen.

### Aufgabe der Erfindung

Angesichts der Nachteile und der bisher verbliebenen Risiken bei dem bis dato angewendeten Reinigungsverfahren liegt der Erfindung die Aufgabe zugrunde, ein verbessertes Verfahren mit erhöhter Sicherheit vorzuschlagen. Eine weitere Aufgabe besteht darin, die zur Durchführung des Reinigungsverfahrens mit der gesteigerten Sicherheit geeigneten Vorrichtungskomponenten anzugeben.

### Übersicht über die Erfindung

Das Verfahren betrifft die Durchführung eines Reinigungszyklus an einer Prozessanlage. Ein Ausgang der Prozessanlage mündet in eine nächste Anlagenkomponente ein, an der ein folienartiger, schlauchförmiger Endlosliner bevorratet ist. Die nächste Anlagenkomponente hat einen Auslauf, an dem Behandlungsgut während des laufenden Anlagenbetriebs in einen Nutzabschnitt des Endlosliners eintritt und durch den Nutzabschnitt weitergeleitet wird. Nach abgestelltem Anlagenbetrieb wird das Innere der nächsten Anlagenkomponente in einem Spülgang gereinigt, und das verschmutzte Spülmittel wird über den Nutzabschnitt einer Entsorgungseinheit zugeführt. Der Nutzabschnitt ist temporär durch eine der nächsten Anlagenkomponente nachgeschaltete Armatur mit einem Verschlusselement geführt. Das Verschlusselement wird vor dem Start des Spülgangs geschlossen und sperrt somit den Durchgang durch den Nutzabschnitt. Während des Spülgangs ist das Verschlusselement geöffnet und erlaubt somit den Durchgang durch den Nutzabschnitt. Nach dem Spülgang wird das Verschlusselement zeitweise wieder geschlossen.

Nachstehend sind besonders vorteilhafte Details zum Verfahren angegeben: Vor dem Start des Spülgangs wird als ortsveränderliche Vorrichtungskomponente die Armatur an den Auslauf der nächsten Anlagenkomponente angedockt, und als ortsveränderliche Vorrichtungskomponente wird ein Ablauf an die Armatur angedockt, um das durch den Nutzabschnitt einfliessende verschmutzte Spülmittel zur Entsorgungseinheit zu leiten. Nach Beendigung des Spülgangs werden der Ablauf und die Armatur einzeln oder zusammen von der nächsten Anlagenkomponente abgedockt.

Vor dem Start des Spülgangs wird der aus der nächsten Anlagenkomponente herausragende Nutzabschnitt des Endlosliners mit einer ersten Abbindung versehen, und danach kann ein Ausblasen des Innenraums der nächsten Anlagenkomponente vorgenommen werden, welches vorzugsweise mit Luft oder einem Inertgas ausgeführt wird. Danach schliessen sich folgende Verfahrensschritte an:
- Andocken der Armatur an den Auslauf der nächsten Anlagenkomponente und axiales Hindurchziehen der ersten Abbindung durch das offene Verschlusselement der Armatur mit Nachziehen vom Endlosliner, bis sauberer, nicht staubbeladener Endlosliner an einer später anzubringenden zweiten Abbindung am sich verlängernden Nutzabschnitt ansteht;
- Schliessen des Verschlusselements der Armatur mit Kontraktion des Nutzabschnitts und Entstehung einer Dichtstelle sowie Anbringen der zweiten Abbindung am Nutzabschnitt zwischen erster Abbindung und Dichtstelle;
- Abschneiden eines ersten Trennteils vom freien Ende des Nutzabschnitts, das zwischen der zweiten Abbindung und der Dichtstelle gefasst ist, sowie Entsorgen des ersten Trennteils;
- Andocken des Ablaufs an die Armatur und Anschluss einer Ableitung an den Ablauf zur Verbindung mit der Entsorgungseinheit;
- Öffnen des Verschlusselements der Armatur mit Auflösung der Dichtstelle am Nutzabschnitt;
- Durchführen des Spülgangs; und
- nach dem Spülgang Abdocken des Ablaufs von der Armatur.

Zwischen dem beendeten Spülgang und vor dem Abdocken des Ablaufs von der Armatur erfolgen das erneute Schliessen des Verschlusselements der Armatur mit Kontraktion des Nutzabschnitts und Wiederentstehung der Dichtstelle sowie ferner:
- Abdocken des Ablaufs von der Armatur;
- Anbringen einer dritten Abbindung am aus der Dichtstelle herausragenden Ende des Nutzabschnitts;
- Abdocken der Armatur von der nächsten Anlagenkomponente;
- axiales Herausziehen der dritten Abbindung aus der nächsten Anlagenkomponente mit Nachziehen vom Endlosliner bei sich verlängerndem Nutzabschnitt;
- Anbringen einer vierten Abbindung am Nutzabschnitt zwischen der dritten Abbindung und der nächsten Anlagenkomponente; und
- Abschneiden eines zweiten Trennteils vom nachgeführten freien Ende des Nutzabschnitts, wobei das zweite Trennteil zwischen der dritten Abbindung und der vierten Abbindung gefasst ist.

Vor dem Abschneiden des zweiten Trennteils wird zwischen der vierten Abbindung und der nächsten Anlagenkomponente eine fünfte Abbindung angebracht. Das Abschneiden des zweiten Trennteils erfolgt zwischen der vierten Abbindung und der fünften Abbindung. Die fünfte Abbindung ist als unterer Verschluss zur Bildung eines Sackes durch Nachziehen vom Endlosliner nutzbar.

Die Vorrichtung zur Durchführung des Verfahrens beruht auf folgenden Anordnungsmerkmalen: Ein Ausgang der Prozessanlage mündet in eine nächste Anlagenkomponente ein, an der ein folienartiger, schlauchförmiger Endlosliner bevorratet ist. Die nächste Anlagenkomponente hat einen Auslauf, an den sich ein Nutzabschnitt des Endlosliners für den Durchfluss des Behandlungsguts während des laufenden Anlagenbetriebs anschliesst. An der nächsten Anlagenkomponente ist ein dritter Rohrstutzen vorgesehen, welcher nach abgestelltem Anlagenbetrieb zur Reinigung des Inneren der nächsten Anlagenkomponente in einem Spülgang dient, wobei der Nutzabschnitt zur Abführung des verschmutzten Spülmittels zu einer Entsorgungseinheit bestimmt ist. Der Nutzabschnitt erstreckt sich temporär durch eine der nächsten Anlagenkomponente nachgeschaltete Armatur mit einem Verschlusselement zur temporären Kontraktion des Nutzabschnitts mit Entstehung einer Dichtstelle, um den Durchfluss durch den Nutzabschnitt zeitweise zu sperren.

Nachstehend sind besonders vorteilhafte Details zur Vorrichtung angegeben: Die Armatur lässt sich als ortsveränderliche Vorrichtungskomponente an den Auslauf der nächsten Anlagenkomponente an- und abdocken. Ein Ablauf lässt sich als ortsveränderliche Vorrichtungskomponente an die Armatur an- und abdocken, um das durch den Nutzabschnitt einfliessende verschmutzte Spülmittel zur Entsorgungseinheit zu leiten.

Die Armatur ist vorzugsweise eine Irisblende, ein Schieber, ein Doppelschieber oder ein Quetschventil.

Die nächste Anlagenkomponente ist ein Abfüllkopf einer Abfüllstation und weist auf:
- eine Röhre, in welche der Ausgang der Prozessanlage einmündet;
- ein Absperrorgan am Ausgang, z.B. in Gestalt einer Drehklappe;
- einen an die Röhre angeschlossenen Leitabschnitt mit einem Auslauf;
- einen am Leitabschnitt angeordneten Auslassflansch, an dem sich die Armatur andocken lässt;
- den am Aussenumfang der Röhre bevorrateten Endlosliner, der am Übergang von der Röhre zum Leitabschnitt auf dessen Innenwandung geführt ist;
- eine Dichtung dazu bestimmt, den Endlosliner temporär gegenüber der Röhre abzudichten; und
- optional einen ersten Rohrstutzen und einen zweiten Rohrstutzen, die vorzugsweise an der Oberseite angeordnet sind und dem Ausblasen des Innenraums der nächsten Anlagenkomponente mittels Luft oder eines Inertgases dienen.
   Die Dichtung ist stationär positioniert und betätigbar, mittels der sich der Endlosliner zirkulär gegen die Aussenwandung der Röhre dichtend anpressen lässt. Die Dichtung ist z.B. als Blähdichtung ausgebildet.

Alternativ ist die Dichtung ortsbeweglich positioniert, mittels der sich der Endlosliner zirkulär gegen die Röhre dichtend anpressen lässt. Hierzu wird die Dichtung z.B. an einem ortsbeweglichen Adapterflansch positioniert. Die Röhre hat eine zur Dichtung komplementäre Dichtkante, um bei daran angedrückter Dichtung zwischen sich den Endlosliner abgedichtet einzuklemmen. Zum Umfassen des äusseren Übergangsbereichs zwischen Dichtkante und angefügter Dichtung kann ein Zentrierring vorgesehen sein, der auf dem Adapterflansch lösbar sitzt.

### Kurzbeschreibung der beigefügten Zeichnungen

Es zeigen jeweils als Prinzipdarstellung den apparativen Aufbau eines Bereichs einer Prozessanlage mit einem zu einer Abfüllstation gehörenden Abfüllkopf zur Durchführung des erfindungsgemässen Reinigungsverfahrens, nämlich:
- Figur 1A:: den Übergang aus dem Betriebszustand zum Reinigungszyklus und dessen erste Situation mit einer aus dem Abfüllkopf herausragenden Folie mit einer ersten Abbindung;
- Figur 1 B:: zweite Situation: an den Abfüllkopf ist eine offene Armatur angesetzt, die Folie ist durch die Armatur gezogen;
- Figur 1C:: dritte Situation: die Armatur ist geschlossen und erzeugt an der Folie eine Dichtstelle, zwischen der ersten Abbindung und der Armatur ist eine zweite Abbindung vorhanden;
- Figur 1D:: vierte Situation: durch Trennen der Folie zwischen der zweiten Abbindung und der Armatur entsteht ein erstes Trennteil;
- Figur 1E:: fünfte Situation: an die Armatur ist ein Ablauf mit weiterführender Ableitung angesetzt;
- Figur 1 F:: sechste Situation: die Armatur ist wieder geöffnet, die Dichtstelle gelöst und die Folie ragt in den Ablauf;
- Figur 1G:: siebente Situation: der Spülvorgang ist gestartet;
- Figur 1H:: achte Situation: der Spülvorgang ist beendet, die Armatur wieder geschlossen, die Dichtstelle erneut erzeugt;
- Figur 1J:: neunte Situation: der Ablauf mit der weiterführenden Ableitung ist entfernt, an der Folie ist eine dritte Abbindung vorhanden;
- Figur 1K:: zehnte Situation: die zuvor wieder geöffnete Armatur ist vom Abfüllkopf entfernt;
- Figur 1L:: elfte Situation: die Folie mit der dritten Abbindung ist aus dem Abfüllkopf weiter herausgezogen;
- Figur 1M:: zwölfte Situation: oberhalb der dritten Abbindung ist eine vierte Abbindung vorhanden, zwischen dieser und dem Abfüllkopf ist eine fünfte Abbindung angebracht;

- Figur 1 N:: dreizehnte Situation: durch Trennen der Folie zwischen der vierten Abbindung und der fünften Abbindung entsteht ein zweites Trennteil, das Reinigungsverfahren ist beendet;
- Figur 2A:: die erste Situation gemäss Figur 1A mit alternativer Konstruktionsvariante im Bereich des Übergangs des Endlosliners vom unteren Aussenumfang der Röhre auf die Innenseite des Leitabschnitts, ohne Behälter;
- Figur 2B:: das vergrösserte Detail X1 aus Figur 2A;
- Figur 2C:: die zweite Situation gemäss Figur 1B in der alternativen Konstruktionsvariante; und
- Figur 2D:: das vergrösserte Detail X2 aus Figur 2C.

### Ausführungsbeispiele

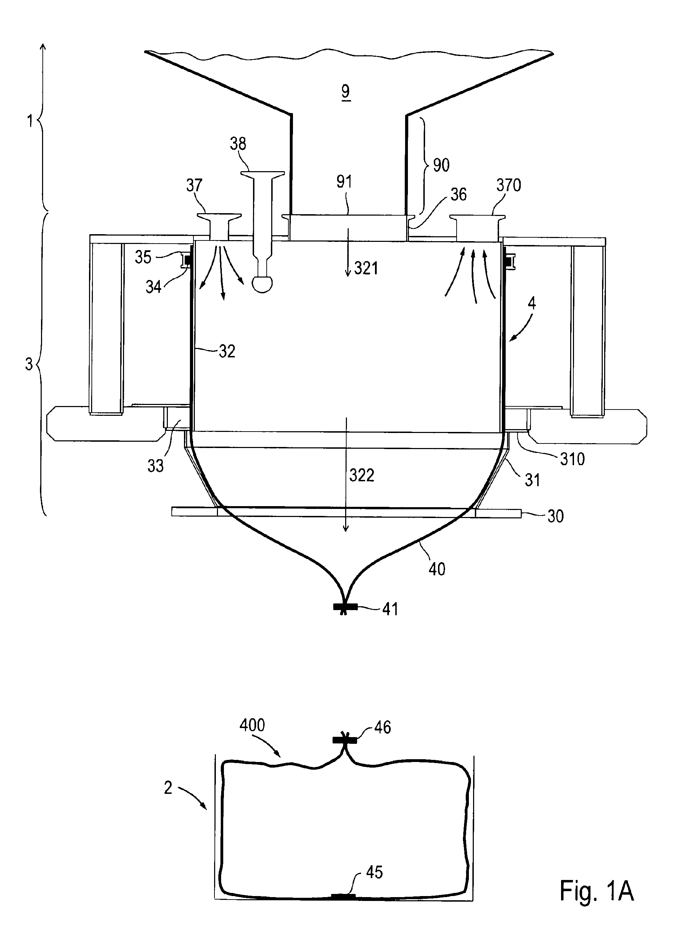

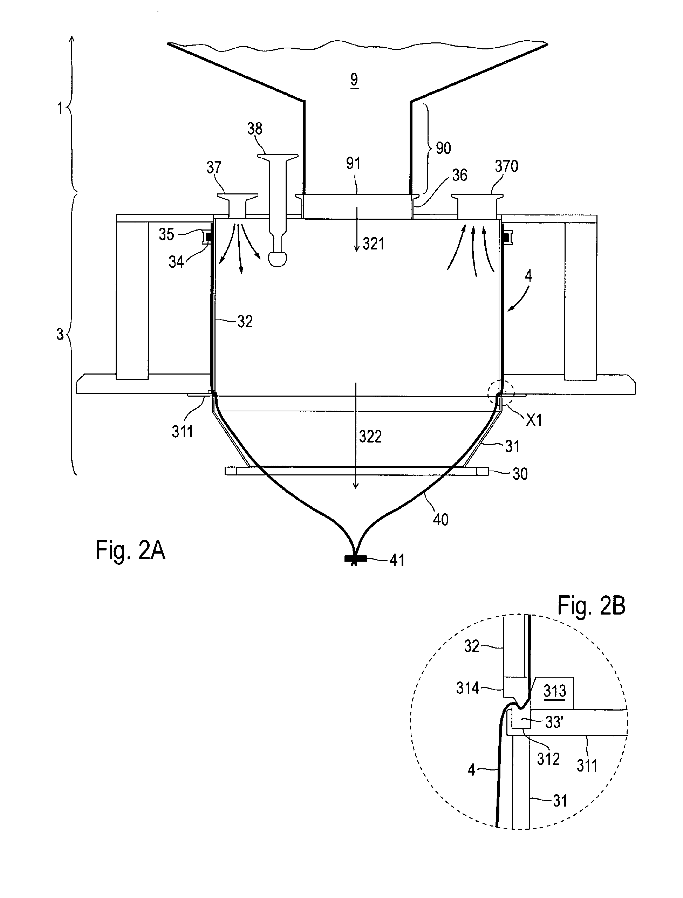

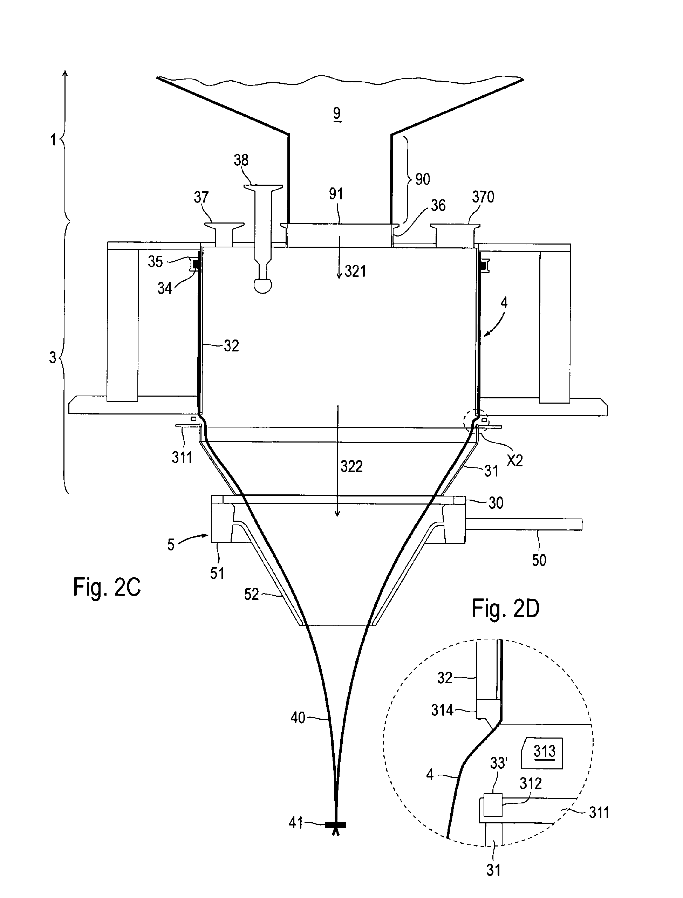

Mit Bezug auf die beiliegenden Zeichnungen erfolgen nachstehend die detaillierte Beschreibung von zwei Ausführungsbeispielen zum erfindungsgemässen Verfahrensablauf der Reinigung an einer Prozessanlage und der jeweils dabei benutzten Vorrichtung. Die Figuren 1A bis 1N illustrieren ein erstes Ausführungsbeispiel und die Figuren 2A bis 2D eine alternative Variante.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen. Im Interesse der Übersichtlichkeit wird auf die wiederholte Bezeichnung von Bauteilen in nachfolgenden Figuren zumeist verzichtet, sofern zeichnerisch eindeutig erkennbar ist, dass es sich um "wiederkehrende" Bauteile handelt.

### Figur 1A

### Betriebszustand, Übergang zum Reinigungszyklus

Im dargestellten Bereich der Prozessanlage 1 werden vorrangig pulverförmige Güter behandelt, nämlich an einer Abfüllstation aus der Prozessanlage 1 portioniert. Der Auslauf 90 des Ausgangs 9 der Prozessanlage 1 ist mit einem Einlassstutzen 36 am Abfüllkopf 3 verbunden. Der Abfüllkopf 3 ist das zentrale Bauteil der Abfüllstation. Anhand einer Absperrung 91 - z.B. eine Drehklappe - kann der Auslauf **90** geöffnet oder verschlossen werden. Zur Dosierung der jeweils gewünschten Füllgutmengen kann die Absperrung **91** entsprechend betätigt werden. Bei offener Absperrung **91** strömt das Füllgut vom Ausgang **9** durch den Auslauf **90** in den Einlauf **321,** die Röhre **32** und den Auslauf **322** des Abfüllkopfs **3** weiter durch den schlauchförmigen Endlosliner 4 in den davon gebildeten Sack **400**. Der Sack **400** ist in einen oben offenen Behälter **2** als weitere Anlagenkomponente eingesetzt, wobei der Endlosliner **4** am unteren Ende mit einer fünften Abbindung **45** verschlossen ist. Die fünfte Abbindung **45** kann durch Verschnüren oder Verschweissen hergestellt werden. Der Behälter **2** könnte einen Einlaufflansch haben, der am Auslassflansch **30** des Abfüllkopfs **3** angedockt ist. Nach dem Befüllen des Sacks **400** wird die Absperrung **91** geschlossen und am oberen Ende des vollen Sacks **400** eine sechste Abbindung **46** angebracht. Zugleich bringt man zwischen der sechsten Abbindung **46** und dem Auslassflansch **30** am heraushängenden Nutzabschnitt **40** des Endlosliners **4** eine erste Abbindung **41** an. Hierauf wird der Endlosliner **4** zwischen der sechsten Abbindung **46,** die am Sack **400** verbleibt, und der ersten Abbindung **41** durchtrennt, so dass sich der im Behälter **2** ruhende gefüllte Sack **400** abtransportieren lässt.

Der Abfüllkopf **3** besteht im wesentlichen aus einer aufrecht stehenden zylinderförmigen Röhre **32**, die unten den runden Auslassflansch **30** und oben den Einlassstutzen **36** hat. Der Auslassflansch **30** und der Einlassstutzen **36** umgeben jeweils eine Öffnung, die unten den Auslauf **322** und oben den Einlauf **321** des Abfüllkopfs **3** bilden. Vom Auslassflansch **30** geht ein den Auslauf **322** umschliessender Leitabschnitt **31** ab. Der Leitabschnitt **31** kann zylindrisch oder trichterförmig sein und weitet sich dann nach oben hin auf. Im Anschluss an den Leitabschnitt **31** erstreckt sich von der Röhre **32** eine Ringschulter **310**, die der Aufnahme einer Dichtung **33**, z.B. in Gestalt einer Blähdichtung, dient. An der Oberseite des Abfüllkopfs **3** umgibt den Einlassstutzen **36** eine Deckfläche, in welcher ein erster, ein zweiter und ein dritter Rohrstutzen **37,370,38** angeordnet sind. Beabstandet zur Röhre **32** erstreckt sich zwischen der Ringschulter **310** und der Deckfläche ein Gestell, welches den Abfüllkopf **3** innerhalb der Abfüllstation stützt.

Auf dem Aussenumfang der Röhre **32**, quasi zwischen Deckfläche und Dichtung **33**, ist Folie als Endlosliner **4** bevorratet. Am oberen Ende der Röhre **32** - benachbart zur Deckfläche - sitzt eine den Endlosliner **4** umgebende Ringdichtung **34**, die von einer Halterung **35** umfasst und somit in Position gehalten wird. Ringdichtung **34** und Halterung **35** fixieren das obere Ende des Endlosliners **4** abgedichtet auf der Röhre **32**. Der Verlauf des Endlosliners **4** wechselt im Bereich der Dichtung **33** durch einen Spalt vom Aussenumfang der zylindrischen Röhre **32** in den Innenumfang des anschliessenden Leitabschnitts **31** und liegt an dessen Innenseite zirkulär an. Durch die Öffnung im Auslassflansch **30** setzt sich der Endlosliner **4** mit einem Nutzabschnitt **40** nach unten fort.

### Erste Situation un Reinigungszyklus

Zweck des Reinigungsverfahrens und der dabei verwendeten Vorrichtung ist es, Rückstände, welche in der Prozessanlage **1** und in der anschliessenden Abfüllstation mit dem Abfüllkopf **3** zurückbleiben - z.B. nach einem Abfüllvorgang oder vor einem Füllgutwechsel -, auszubringen und zu entsorgen. Beim Start des Reinigungsverfahrens ist die Prozessanlage **1** mit dem am Ausgang **9** vorhandenen Auslauf **90** weiterhin am Abfüllkopf **3** verbunden. Die Absperrung **91** ist geschlossen. Aus dem Auslassflansch **30** des Abfüllkopfs **3** hängt ein Nutzabschnitt **40** des Endlosliners **4** heraus, an dessen freien Ende eine erste Abbindung **41** vorhanden ist.

Bei einer optionalen Entstaubung innerhalb der Röhre **32** wird durch den ersten Rohrstutzen **37** z.B. Luft eingeblasen, die man durch den zweiten Rohrstutzen **370** in eine daran anschliessende - nicht gezeigte - Entsorgungseinheit abführt. Die Dichtung **33** ist dabei aktiviert, so dass der Endlosliner **4** an die Röhre **32** gepresst wird und somit während des Einblasens von Luft keine Staubpartikel des Behandlungsguts zwischen die Aussenwandung der Röhre **32** und das Innere des bevorrateten Endlosliners **4** gelangen können. Die erste Abbindung **41** am freien Ende des Nutzabschnitts **40** verhindert jeglichen Gasstrom von innerhalb der Röhre **32** nach aussen. Bei der Entstaubung wird partikelhaltige Luft aus dem Inneren der Röhre **32** und dem vom Nutzabschnitt **40** umschlossenen Volumen über den zweiten Rohrstutzen **370** abgeführt. Damit wird vermieden, dass sich innerlich auf dem im zweiten Verfahrensschritt durch Nachziehen vom Endlosliner **4** verlängerten Nutzabschnitt **40** in erheblicher Menge Staubpartikel des Behandlungsguts aus dem Innenvolumen absetzen.

Der weitere Ablauf des Reinigungsverfahrens und die dabei benutzten Vorrichtungskomponenten werden nachfolgend schrittweise erläutert.

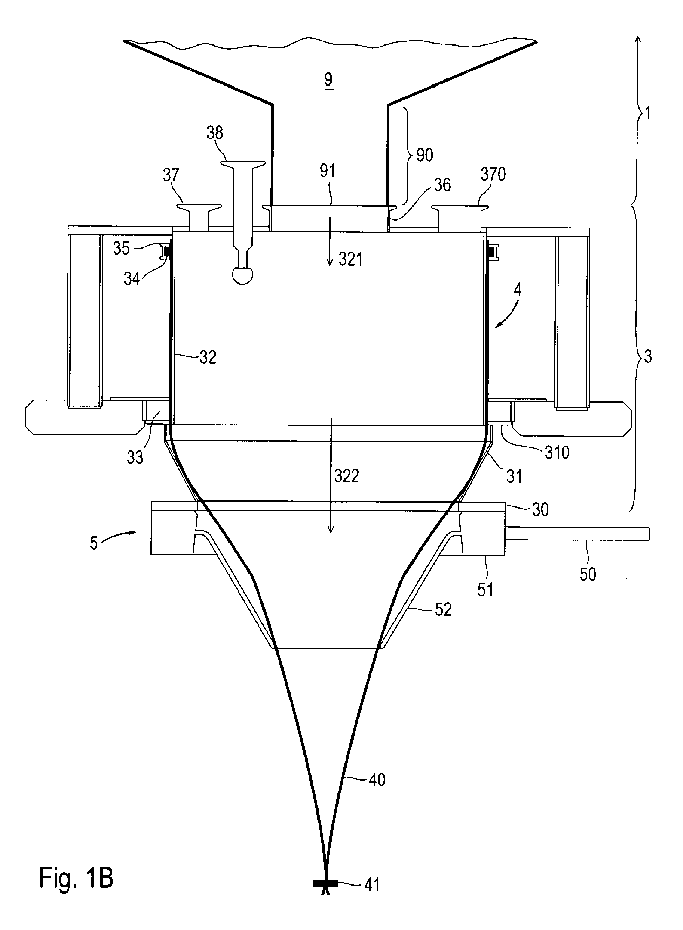

### Figur 1 B: Zweite Situation

An den Auslassflansch **30** des Abfüllkopfs **3** ist eine Armatur **5** angesetzt, die sich in offener Stellung befindet. Als Armatur **5** eignet sich besonders eine Irisblende; die gleiche Funktion könnte auch von einem Schieber, einem Doppelschieber oder einem Quetschventil erfüllt werden. Die Armatur **5** hat einen Kragen **51**, der eine Öffnung umschliesst.

Am Kragen **51** setzt ein, gegenwärtig trichterförmig aus der Öffnung heraus, abwärts ragendes Verschlusselement **52** an, das sich in Offenstellung befindet. Am Kragen **51** ist ein Stellorgan **50** vorgesehen, mittels dem sich das Verschlusselement **52** zwischen der offenen und geschlossenen Stellung betätigen lässt. Bei inaktiver Dichtung **33** - der Endlosliner **4** wird nicht zirkulär auf den unteren Abschnitt der Röhre **32** gepresst - hat man vom bevorrateten Endlosliner **4** unter Verlängerung des Nutzabschnitts **40** so weit Material abgezogen, bis sich der Nutzabschnitt **40** weit durch die offene Armatur **5** erstreckt und ein sauberer Bereich des Nutzabschnitts **40** unterhalb des geöffneten Verschlusselements **52** hervorragt. Die erste Abbindung **41** am freien Ende des Nutzabschnitts **40** gelangt dadurch in grösseren Abstand zur Armatur **5.**

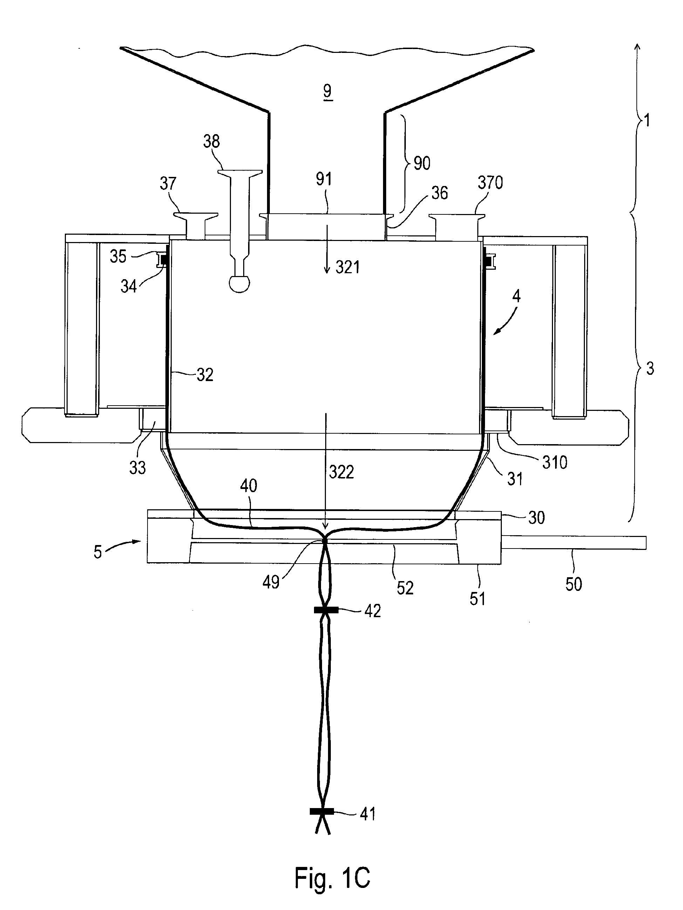

### Figur 1C: Dritte Situation

Die an den Auslassflansch **30** des Abfüllkopfs **3** angesetzte Armatur **5** ist mittels des Stellorgans **50** von der offenen Stellung in die geschlossene Stellung bewegt worden. Dabei liegt das Verschlusselement **52** in radialer Richtung zur Öffnung und klemmt den Nutzabschnitt **40** im sauberen Bereich zwischen sich zentrisch ein, wodurch eine Dichtstelle **49** entsteht. Im Anschluss an die Dichtstelle **49** ragt der Nutzabschnitt **40** unterhalb des geschlossenen Verschlusselements **52** hervor, wobei zwischen erster Abbindung **41** und Dichtstelle **49** eine zweite Abbindung **42** im Bereich des sauberen Nutzabschnitts **40** angebracht ist. Damit ist der beim vorangehenden Abfüllvorgang entstandene kontaminierte Bereich des Nutzabschnitts **40** zwischen der ersten Abbindung **41** und der zweiten Abbindung 42 eingeschlossen.

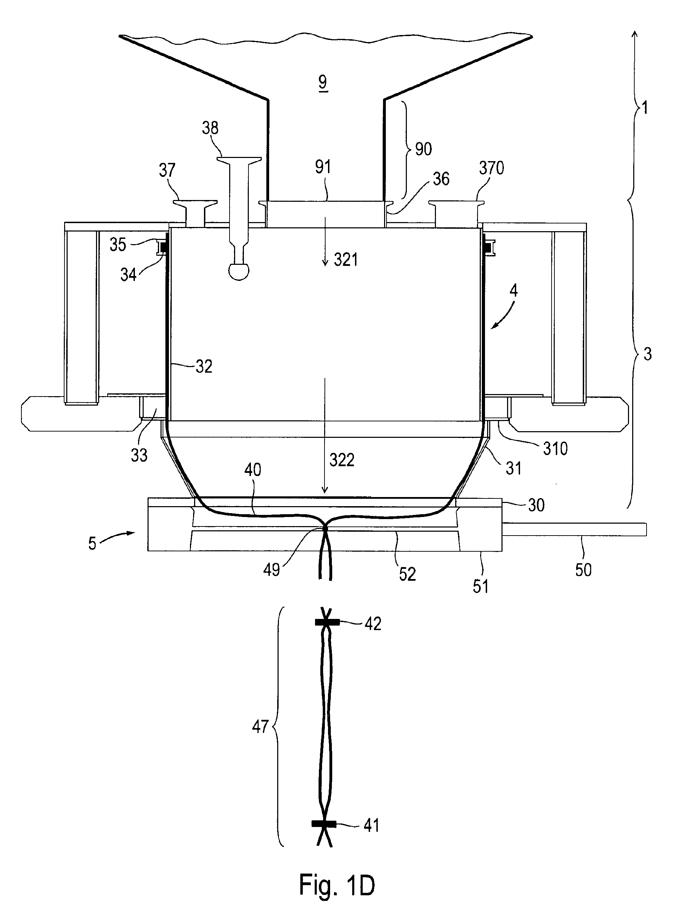

### Figur 1 D: Vierte Situation

Zwischen Dichtstelle **49** und zweiter Abbindung **42** wird der Nutzabschnitt **40** durchtrennt, so dass der beim Abfüllvorgang entstandene kontaminierte Bereich als erstes Trennteil **47** entsorgt werden kann. Mit dem Abschneiden des ersten Trennteils **4**7 hat sich der Nutzabschnitt **40** verkürzt und besteht nun nur mehr aus der Strecke vom Leitabschnitt **31** bis zum freien Ende unterhalb der Dichtstelle 49.

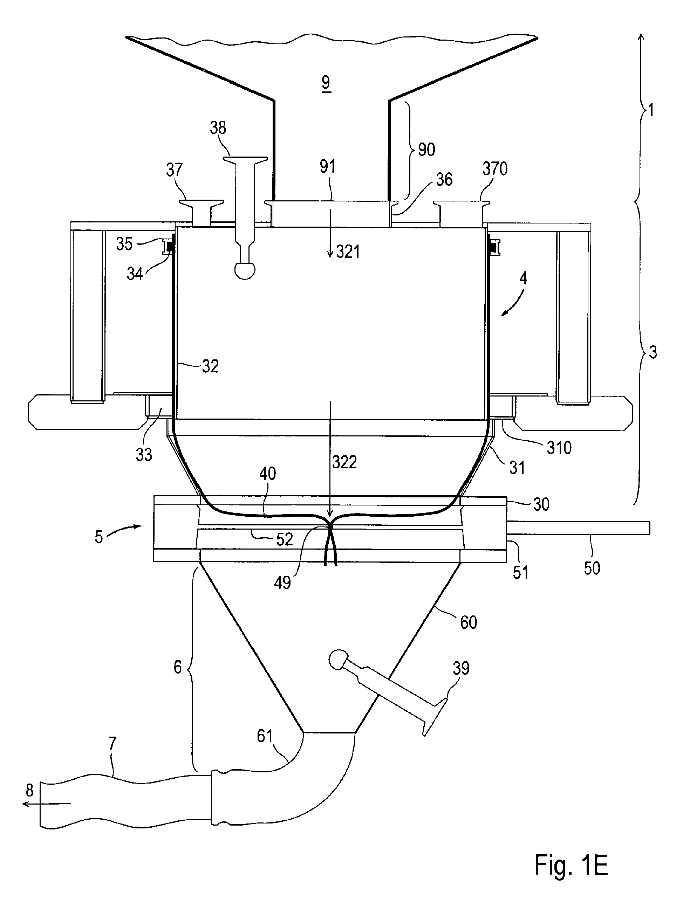

### Figur 1 E: Fünfte Situation

An die Unterseite der weiterhin geschlossenen Armatur **5** ist ein Ablauf 6 angedockt, der sich aus einem trichterförmigen Auffangbecken **60** und einem daran angeschlossenen Krümmer **61** zusammensetzt. Im Auffangbecken **60** ist ein optionaler vierter Rohrstutzen **39** positioniert. An den Krümmer **61** ist eine Ableitung **7** angeschlossen, die zu einer Entsorgungseinheit 8 führt.

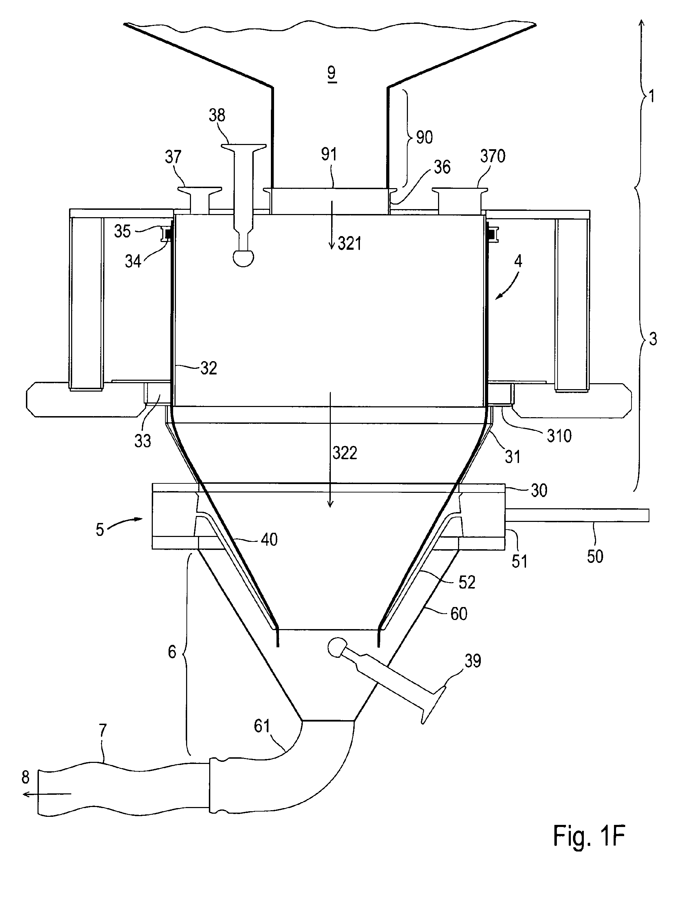

### Figur 1 F: Sechste Situation

Das Verschlusselement **52** der Armatur **5** hat man von der zuvor geschlossenen Stellung in die offene Stellung bewegt und hängt jetzt in das Auffangbecken **60** hinein. Der frei endende Nutzabschnitt **40** überlappt das Verschlusselement **52**.

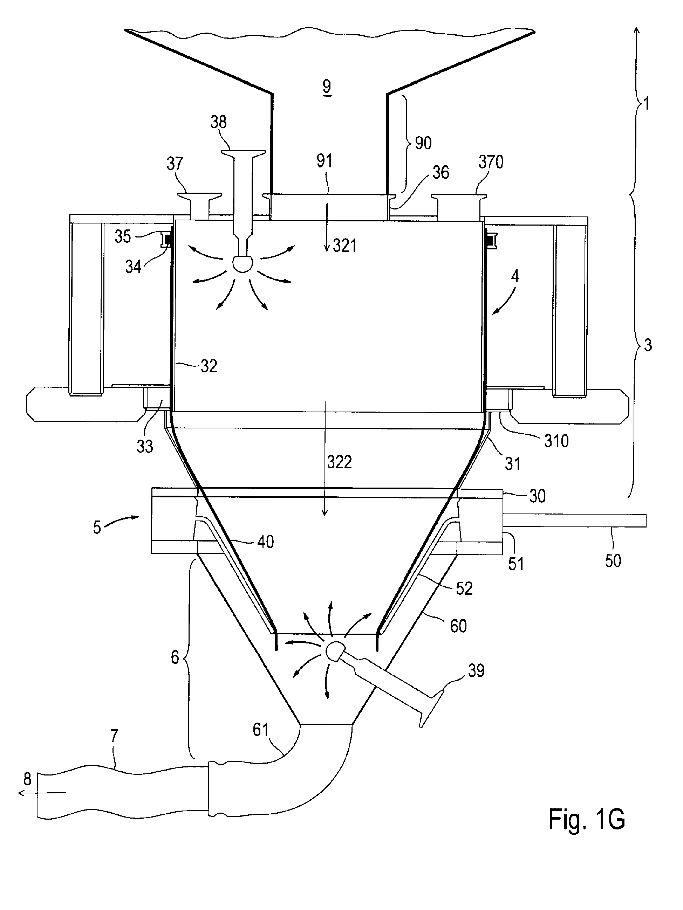

### Figur 1G: Siebente Situation

Der in die Röhre **32** ragende dritte Rohrstutzen **38** und der optional in das Auffangbecken **60** hineinragende vierte Rohrstutzen **39** sind als Waschdüsen aktiviert, von denen während eines Spülvorgangs Reinigungsflüssigkeit in das Innere der Röhre **32** bzw. in den Ablauf **6** versprüht wird. Sofern bis in die Prozessanlage **1** hinein ebenfalls zu reinigen ist, kann darin - z.B. im Bereich des Ausgangs **9-**ein weiterer Rohrstutzen als Waschdüse vorhanden sein. Beim Spülen, auch von Bereichen in der Prozessanlage **1**, ist die Absperrung **91** geöffnet. Mit dem Spülgang innerhalb des Abfüllkopfs **3** und eventuell auch in Bereichen der Prozessanlage **1,** werden die Rückstände, welche durch die zur Figur 1A beschriebene Entstaubung noch nicht ausgebracht wurden und sich im Innenbereich der Röhre **32** oder in der Prozessanlage **1** sowie im Ausgang **9** befinden, ausgeschwemmt. Die Spülflüssigkeit fliesst durch den Auslauf **322**, die offene Armatur **5,** den Ablauf **6** und die Ableitung **7** der Entsorgung **8** zu. Beim Spülgang ist die Dichtung **33** aktiviert, so dass hier der Endlosliner **4** an den Aussenumfang der Röhre **32** gepresst wird und Feuchtigkeit, die zwischen dem Nutzabschnitt **40** und dem Verschlusselement **52** bzw. dem Leitabschnitt **31** vordringen könnte, nicht über die Dichtung **33** hinaus entweichen kann.

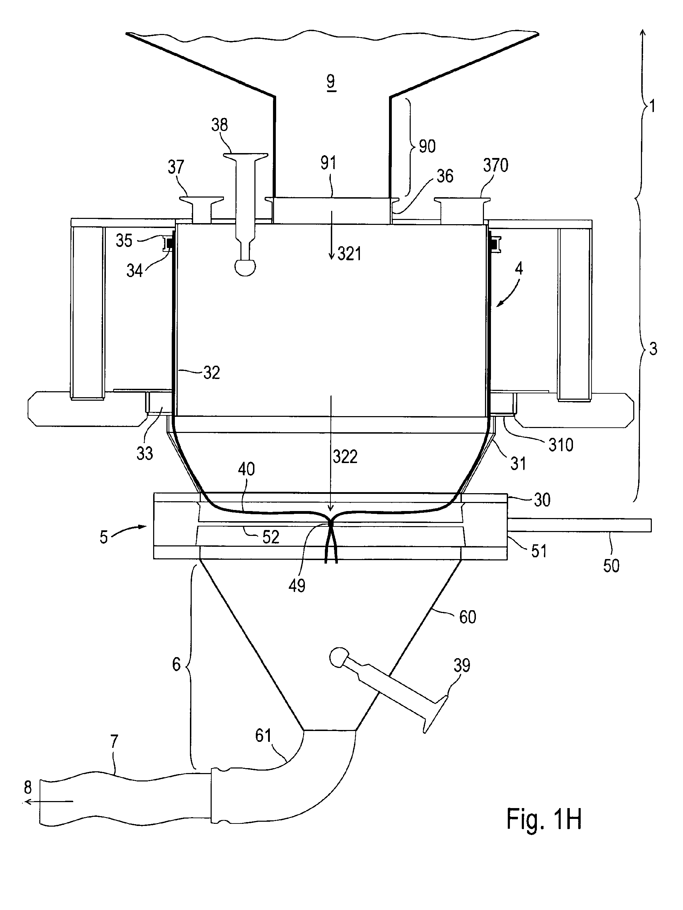

### Figur 1H: Achte Situation

Die an den Auslassflansch **30** des Abfüllkopfs **3** angesetzte Armatur **5** hat man mittels des Stellorgans **50** von der offenen in die geschlossene Stellung bewegt. Dabei erstreckt sich das Verschlusselement **52** wieder in radialer Richtung zur Öffnung und klemmt den sauber gespülten Nutzabschnitt **40** zwischen sich zentrisch ein, wodurch am Nutzabschnitt **40** erneut eine Dichtstelle **49** entsteht. Unterhalb der Dichtstelle **49** ragt ein freies Ende des Nutzabschnitts **40** hervor.

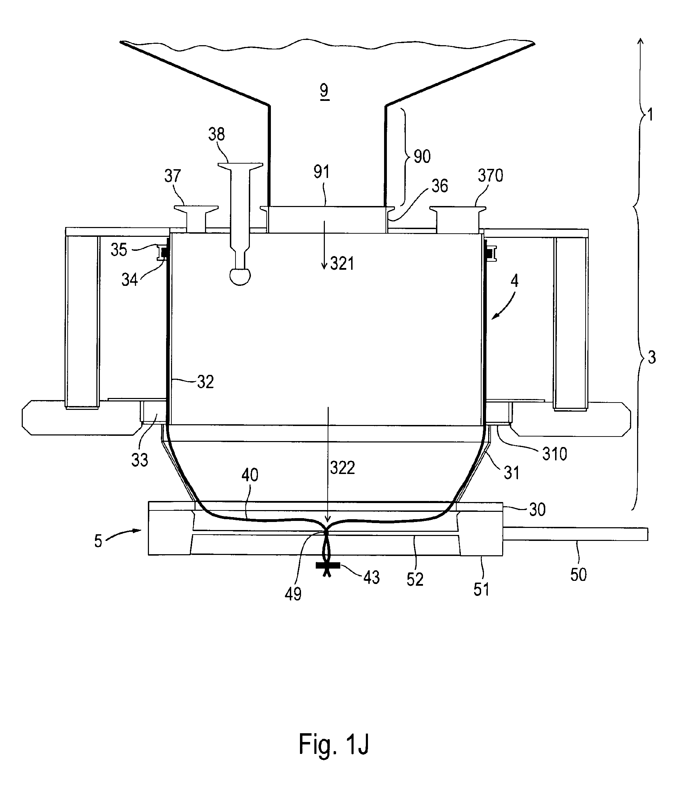

### Figur 1J: Neunte Situation

Der Ablauf **6** mit dem Auffangbecken **60** und dem Krümmer **61** sind von der Unterseite der geschlossenen Armatur **5** entfernt. Es wird eine dritte Abbindung **43** am freien Ende des Nutzabschnitts **40** angebracht, welches unterhalb der Dichtstelle **49** heraushängt.

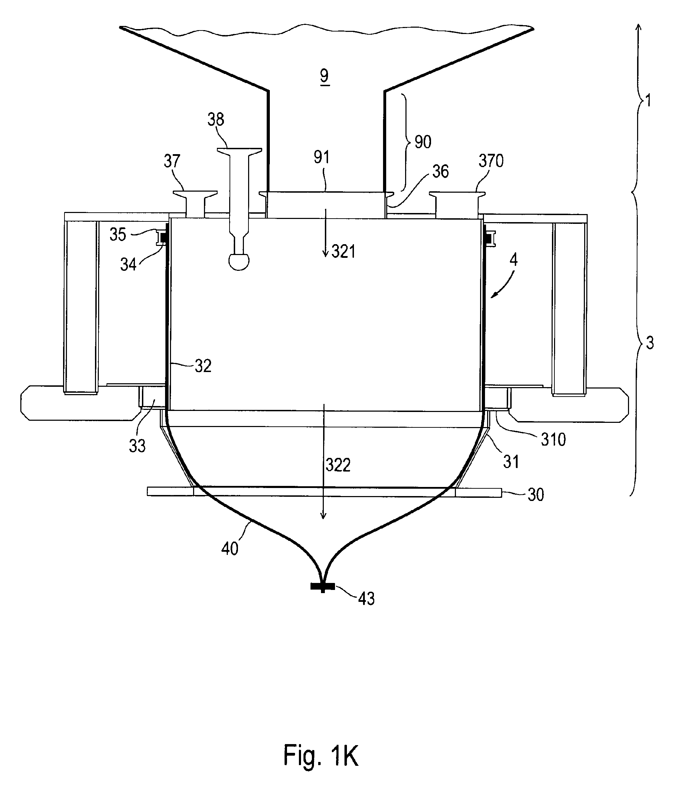

### Figur 1 K: Zehnte Situation

Die Armatur **5** hat man geöffnet und vom Auslassflansch **30** des Abfüllkopfs **3** entfernt. Der Nutzabschnitt **40** hängt durch die Öffnung im Auslassflansch **30** nach unten. Durch die dritte Abbindung **43** ist die Abdichtung gegenüber der Umgebung gewährleistet.

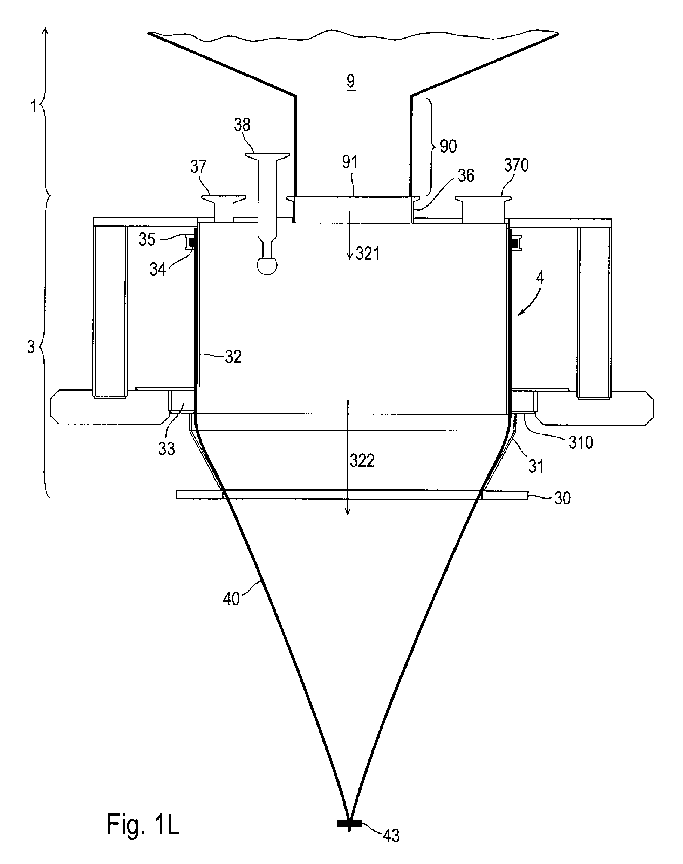

### Figur 1L: Elfte Situation

Ähnlich zur zweiten Situation gemäss Figur 1B hat man - bei unaktivierter Dichtung **33** - vom bevorrateten Endlosliner **4** sauberes Material soweit nachgezogen, bis ein langer Nutzabschnitt **40** aus dem Auslassflansch **30** heraushängt. Am freien Ende des Nutzabschnitts **40** ist noch immer die dritte Abbindung **43** vorhanden.

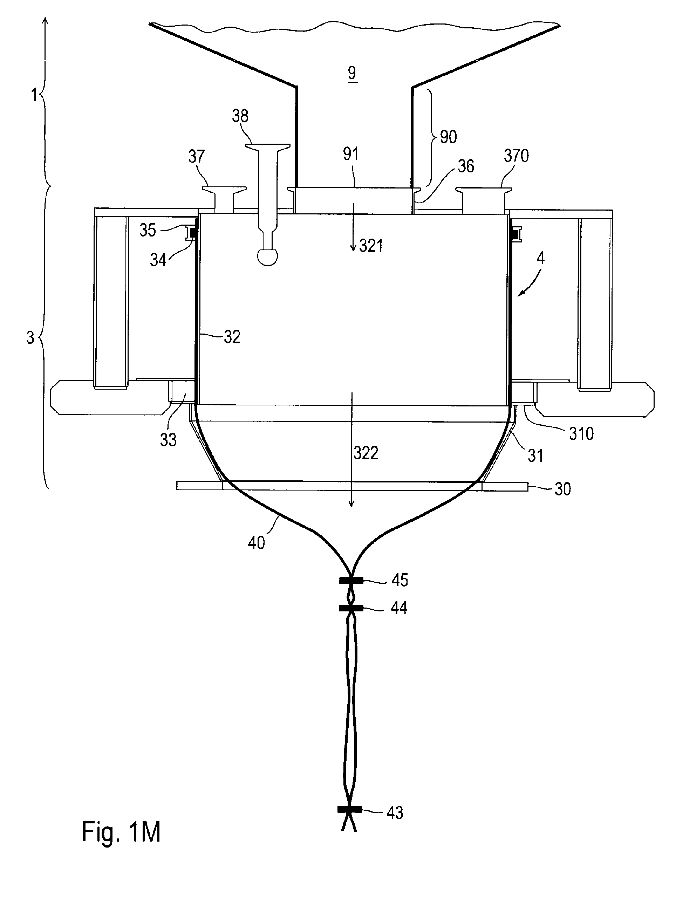

### Figur 1 M: Zwölfte Situation

Zwischen der dritten Abbindung **43** und dem Auslassflansch **30** wird am Nutzabschnitt **40** eine vierte Abbindung **44** angebracht. Damit ist der beim vorangehenden Spülgang noch mit Rückständen versehene kontaminierte Bereich des Nutzabschnitts **40** zwischen dritter Abbindung **43** und vierter Abbindung **44** eingeschlossen. Zusätzlich wird zwischen der vierten Abbindung **44** und dem Auslassflansch **30** eine fünfte Abbindung **45** angebracht.

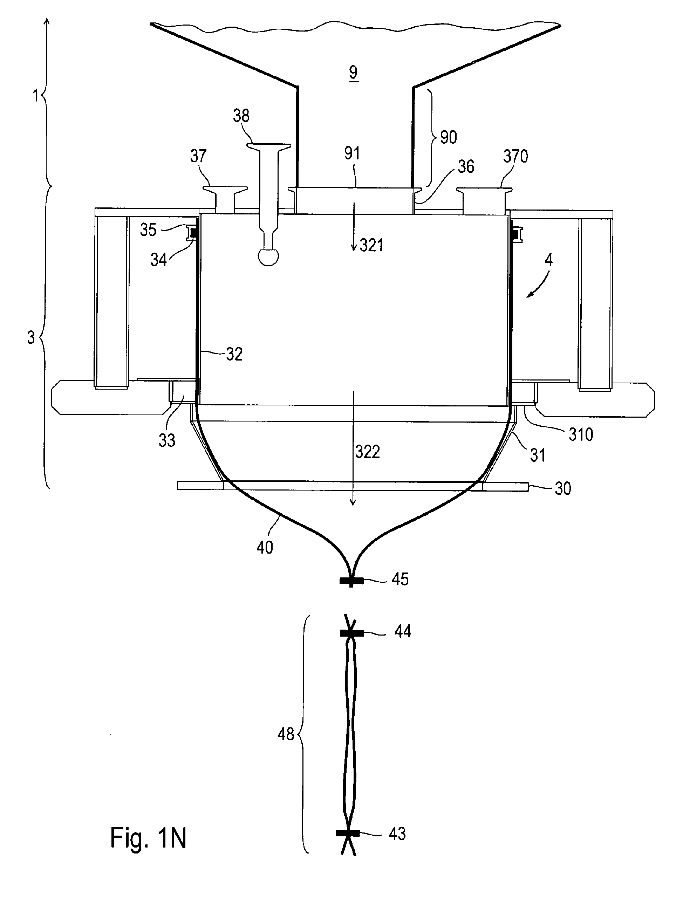

### Figur 1 N: Dreizehnte Situation

Zwischen der vierten Abbindung **44** und der fünften Abbindung **45** wird der Nutzabschnitt **40** durchtrennt, so dass ein zu entsorgendes zweites Trennteil 48 entsteht.

Vor dem Start eines neuen Abfüllvorgangs wird wieder ein Behälter 2 bereitgestellt und vom Endlosliner **4** so weit Material abgezogen, bis die fünfte Abbindung **45** am Boden des Behälters **2** liegt und der verlängerte Nutzabschnitt **40** einen zu befüllenden Sack **400** bildet. Ein nächster Zyklus des Reinigungsverfahrens beginnt wieder mit dem Anbringen der ersten Abbindung **41** am Nutzabschnitt **40** des Endlosliners **4** gemäss Figur 1A.

### Figuren 2A und 2B

In der 1. Situation (siehe Figur 1A) ist bei der zugehörigen ersten Konstruktionsvariante die Dichtung **33** aktiviert; in der 2. bis 6. Situation (siehe Figuren 1B bis 1F) ist die Dichtung **33** deaktiviert; von der 7. bis zur 10. Situation wird die Dichtung **33** wieder aktiviert und schliesslich von der 11. bis zur 13. Situation wird die Dichtung **33** erneut deaktiviert.

Bei höheren Anforderungen an die Druckdichtheit ist der Bereich, in welchem der Endlosliner **4** vom unteren Aussenumfang der Röhre **32** auf die Innenseite des Leitabschnitts **31** übergeht, in einer alternativen Konstruktionsvariante gestaltet. Anstelle des vorherigen Aufbaus mit der oberhalb der Ringschulter **310** angeordneten pneumatischen Dichtung **33** - zum Anpressen des Endlosliners **4** an den Aussenumfang der Röhre **32** -, sind nun bei der alternativen Konstruktionsvariante ein beweglicher Adapterflansch **311** mit Zentrierring **313** sowie eine statische Dichtung **33'** und eine dazu gegenüberliegende Dichtkante **314** vorgesehen. Der Adapterflansch **311** lässt sich von unten an den Übergangsbereich, in welchem der Endlosliner **4** vom unteren Aussenumfang der Röhre **32** auf die Innenseite des Leitabschnitts **31** führt, vorteilhaft mittels einer nicht dargestellten Hubvorrichtung bewegen. Der kreisringförmige Adapterflansch **311** hat nahe seinem Innenumfang eine umlaufende, nach oben offene Nut 312, in der die Dichtung **33'** sitzt. Der Leitabschnitt **31** ist vorzugsweise mit seinem oberen Ende am Adapterflansch **311** befestigt.

Über der Dichtung **33'** ist die Röhre **32** an ihrem unteren Ende mit einer umlaufenden Dichtkante **314** versehen, die z.B. auch als konturierter Anpressring gestaltet sein könnte. Im abgedichteten Zustand - äquivalent zur 1. Situation gemäss Figur 1A - ist der Endlosliner **4** zwischen der Dichtung **33**' und der Dichtkante **314** durch Andrücken des Adapterflanschs **311** eingeklemmt. Die elastische Dichtung **33'** wird mit dem zwischengefügten Endlosliner gegen die V-förmig profilierte Dichtkante **314** gepresst. Zur erhöhten Dichtsicherheit kann zusätzlich auf den Adapterflansch **311** ein Zentrierring **313** gelegt werden, der den Übergang zwischen Dichtung **33'** und Dichtkante **314** sowie den aussen entlang der Dichtkante **314** hin zum Aussenumfang der Röhre **32** erstreckenden Endlosliner **4** überdeckt. Die zuvor unter der ersten Konstruktionsvariante beschriebenen Arbeitsschritte der 1. Situation (Figur 1A) bleiben unverändert.

### Figuren 2C und 2D

Äquivalent zur 2. Situation gemäss Figur 1B mit deaktivierter Dichtung **33** befindet sich bei der alternativen Konstruktionsvariante die Dichtung **33'** von der Dichtkante **314** gelöst bzw. völlig entfernt, so dass der Endlosliner **4** lose vom Aussenumfang der Röhre **32** zur Innenseite des Leitabschnitts **31** geführt wird. Das Lösen der Dichtung **33'** von der Dichtkante **314** geschieht durch Entfernen des Zentrierrings **313** und Absenken des Adapterflanschs **311**, vorteilhaft wiederum mit der nicht gezeigten Hubvorrichtung. Ist der Leitabschnitt **31** am Adapterflansch **311** befestigt, so fährt zugleich der Leitabschnitt **31** abwärts. Während der 2. bis 6. Situation - äquivalent zu den Figuren 1B bis 1F - bleibt dieser Zustand mit den gleichen Arbeitsschritten beibehalten.

Mit Eintritt in die 7. Situation bis zur Vollendung der **10**. Situation - äquivalent zu den Figuren 1G bis 1K - wird durch erneutes Heranfahren des Adapterflanschs **311** an die Dichtkante **314** und das Anfügen des optionalen Zentrierrings **313** der Zustand des dazwischen eingeklemmten Endlosliners **4** wieder hergestellt und die zugehörigen Arbeitsschritte können ausgeführt werden.

Für die 11. bis 13. Situation - äquivalent zu den Figuren 1L bis 1N - wird die Verklemmung des Endlosliners **4** zwischen der Dichtung **33'** und der Dichtkante **314** durch Abnehmen des Zentrierrings **313** und Entfernen des Adapterflanschs **311** wieder gelöst und die betreffenden unveränderten Arbeitsschritte lassen sich ausführen. Ein neuer Prozesszyklus würde mit der 1. Situation gemäss Figur 2A beginnen.

## Patentansprüche

1. Verfahren zur Durchführung eines Reinigungszyklus an einer Prozessanlage (**1**), wobei:
a) ein Ausgang (**9**) der Prozessanlage (**1**) in eine nächste Anlagenkomponente (**3**) einmündet, an der ein folienartiger, schlauchförmiger Endlosliner (**4**) bevorratet ist;
b) die nächste Anlagenkomponente (**3**) einen Auslauf (**322**) hat, an dem Behandlungsgut während des laufenden Anlagenbetriebs in einen Nutzabschnitt (**40**) des Endlosliners (**4**) eintritt und durch den Nutzabschnitt (**40**) weitergeleitet wird;
c) nach abgestelltem Anlagenbetrieb das Innere der nächsten Anlagenkomponente (**3**) in einem Spülgang gereinigt wird und das verschmutzte Spülmittel über den Nutzabschnitt (**40**) einer Entsorgungseinheit (**8**) zugeführt wird, **dadurch gekennzeichnet, dass**
d) der Nutzabschnitt (**40**) temporär durch eine der nächsten Anlagenkomponente (**3**) nachgeschaltete Armatur (**5**) mit einem Verschlusselement (**52**) geführt ist; und
e) das Verschlusselement (**52**) vor dem Start des Spülgangs geschlossen wird und somit den Durchgang durch den Nutzabschnitt (**40**) sperrt, während des Spülgangs geöffnet ist, somit den Durchgang durch den Nutzabschnitt (**40**) erlaubt, und nach dem Spülgang zeitweise wieder geschlossen wird.

2. Verfahren nach Anspruch 1, **dadurch gekennzeichnet, dass**
a) vor dem Start des Spülgangs:
aa) als ortsveränderliche Vorrichtungskomponente die Armatur (**5**) an den Auslauf (**322**) der nächsten Anlagenkomponente (**3**) angedockt wird;
ab) als ortsveränderliche Vorrichtungskomponente ein Ablauf (**6**) an die Armatur (**5**) angedockt wird, um das durch den Nutzabschnitt (**40**) einfliessende verschmutzte Spülmittel zur Entsorgungseinheit (**8**) zu leiten; und
b) nach Beendigung des Spülgangs der Ablauf (**6**) und die Armatur (**5**) einzeln oder zusammen von der nächsten Anlagenkomponente (**3**) abgedockt werden.

3. Verfahren nach zumindest einem der Ansprüche 1 und 2, **dadurch gekennzeichnet, dass** vor dem Start des Spülgangs der aus der nächsten Anlagenkomponente (**3**) herausragende Nutzabschnitt (**40**) des Endlosliners (**4**) mit einer ersten Abbindung (**41**) versehen wird und danach ein Ausblasen des Innenraums der nächsten Anlagenkomponente (**3**) vorgenommen werden kann, welches vorzugsweise mit Luft oder einem Inertgas ausgeführt wird; und sich folgende Verfahrensschritte anschliessen:
a) Andocken der Armatur (**5**) an den Auslauf (**322**) der nächsten Anlagenkomponente (**3**) und axiales Hindurchziehen der ersten Abbindung (**41**) durch das offene Verschlusselement (**52**) der Armatur (**5**) mit Nachziehen vom Endlosliner (**4**), bis sauberer, nicht staubbeladener Endlosliner (**4**) an einer später anzubringenden zweiten Abbindung (**42**) am sich verlängernden Nutzabschnitt (**40**) ansteht;
b) Schliessen des Verschlusselements (**52**) der Armatur (**5**) mit Kontraktion des Nutzabschnitts (**40**) und Entstehung einer Dichtstelle (**49**) sowie Anbringen der zweiten Abbindung (**42**) am Nutzabschnitt (**40**) zwischen erster Abbindung (**41**) und Dichtstelle (**49**);
c) Abschneiden eines ersten Trennteils (**47**) vom freien Ende des Nutzabschnitts (**40**), das zwischen der zweiten Abbindung (**42**) und der Dichtstelle (**49**) gefasst ist, sowie Entsorgen des ersten Trennteils (**47**);
d) Andocken des Ablaufs (**6**) an die Armatur (**5**) und Anschluss einer Ableitung an den Ablauf (**6**) zur Verbindung mit der Entsorgungseinheit (**8**);
e) Öffnen des Verschlusselements (**52**) der Armatur (**5**) mit Auflösung der Dichtstelle (49) am Nutzabschnitt (**40**);
f) Durchführen des Spülgangs; und
g) nach dem Spülgang Abdocken des Ablaufs (**6**) von der Armatur (**5**).

4. Verfahren nach zumindest einem der Ansprüche 1 bis 3, **gekennzeichnet durch** folgende Verfahrensschritte:
a) zwischen dem beendeten Spülgang und vor dem Abdocken des Ablaufs (**6**) von der Armatur (**5**) erneutes Schliessen des Verschlusselements (**52**) der Armatur (**5**) mit Kontraktion des Nutzabschnitts (**40**) und Wiederentstehung der Dichtstelle (**49**);
b) Abdocken des Ablaufs (**6**) von der Armatur (**5**);
c) Anbringen einer dritten Abbindung (**43**) am aus der Dichtstelle (**49**) herausragenden Ende des Nutzabschnitts (**40**);
d) Abdocken der Armatur (**5**) von der nächsten Anlagenkomponente (**3**);
e) axiales Herausziehen der dritten Abbindung (**43**) aus der nächsten Anlagenkomponente (**3**) mit Nachziehen vom Endlosliner (**4**) bei sich verlängerndem Nutzabschnitt (**40**);
f) Anbringen einer vierten Abbindung (**44)** am Nutzabschnitt (**40**) zwischen der dritten Abbindung (**43**) und der nächsten Anlagenkomponente (**3**); und
g) Abschneiden eines zweiten Trennteils (**48**) vom nachgeführten freien Ende des Nutzabschnitts (**40**), wobei das zweite Trennteil (**48**) zwischen der dritten Abbindung (**43**) und der vierten Abbindung (**44**) gefasst ist.

5. Verfahren nach zumindest einem der Ansprüche 1 bis 4, **dadurch gekennzeichnet, dass**
a) vor dem Abschneiden des zweiten Trennteils (**48**) zwischen der vierten Abbindung (**44**) und der nächsten Anlagenkomponente (**3**) eine fünfte Abbindung (**45)** angebracht wird;
b) das Abschneiden des zweiten Trennteils (**48**) zwischen der vierten Abbindung (**44**) und der fünften Abbindung (**45**) erfolgt; und
c) die fünfte Abbindung (**45**) als unterer Verschluss zur Bildung eines Sackes (**400**) durch Nachziehen vom Endlosliner (**4**) nutzbar ist.

6. Vorrichtung zur Durchführung des Verfahrens eines Reinigungszyklus an einer Prozessanlage (**1**) nach zumindest einem der Ansprüche 1 bis 5, wobei:
a) ein Ausgang (**9**) der Prozessanlage (**1**) in eine nächste Anlagenkomponente (**3**) einmündet, an der ein folienartiger, schlauchförmiger Endlosliner (**4**) bevorratet ist;
b) die nächste Anlagenkomponente (**3**) einen Auslauf (**322**) hat, an den sich ein Nutzabschnitt (**40**) des Endlosliners (**4**) für den Durchfluss des Behandlungsguts während des laufenden Anlagenbetriebs anschliesst;
c) an der nächsten Anlagenkomponente (**3**) ein dritter Rohrstutzen (**38**) vorgesehen ist, welcher nach abgestelltem Anlagenbetrieb zur Reinigung des Inneren der nächsten Anlagenkomponente (**3**) in einem Spülgang dient, wobei der Nutzabschnitt (**40**) zur Abführung des verschmutzten Spülmittels zu einer Entsorgungseinheit (**8**) bestimmt ist, **dadurch gekennzeichnet, dass**
d) sich der Nutzabschnitt (**40**) temporär durch eine der nächsten Anlagenkomponente (**3**) nachgeschaltete Armatur (**5**) mit einem Verschlusselement (**52**) zur temporären Kontraktion des Nutzabschnitts (**40**) mit Entstehung einer Dichtstelle (**49**) erstreckt, um den Durchfluss durch den Nutzabschnitt (**40**) zeitweise zu sperren.

7. Vorrichtung nach Anspruch 6, **dadurch gekennzeichnet, dass**
a) die Armatur (**5**) sich als ortsveränderliche Vorrichtungskomponente an den Auslauf (**322**) der nächsten Anlagenkomponente (**3**) an- und abdocken lässt; und
b) ein Ablauf (**6**) sich als ortsveränderliche Vorrichtungskomponente an die Armatur (**5**) an- und abdocken lässt, um das durch den Nutzabschnitt (**40**) einfliessende verschmutzte Spülmittel zur Entsorgungseinheit (**8**) zu leiten.

8. Vorrichtung nach zumindest einem der Ansprüche 6 und 7, **dadurch gekennzeichnet, dass** die Armatur (**5**) vorzugsweise eine Irisblende, ein Schieber, ein Doppelschieber oder ein Quetschventil ist.

9. Vorrichtung nach zumindest einem der Ansprüche 6 bis 8, **dadurch gekennzeichnet, dass** die nächste Anlagenkomponente (**3**) ein Abfüllkopf einer Abfüllstation ist und aufweist:
a) eine Röhre (**32**), in welche der Ausgang (**9**) der Prozessanlage (**1**) einmündet;
b) ein Absperrorgan (**91**) am Ausgang (**9**), z.B. in Gestalt einer Drehklappe;
c) einen an die Röhre (**32**) angeschlossenen Leitabschnitt (**31**) mit einem Auslauf;
d) einen am Leitabschnitt (**31**) angeordneten Auslassflansch (**30**), an dem sich die Armatur (**5**) andocken lässt;
e) den am Aussenumfang der Röhre (**32**) bevorrateten Endlosliner (**4**), der am Übergang von der Röhre **(32**) zum Leitabschnitt (**31**) auf dessen Innenwandung geführt ist;
f) eine Dichtung (**33,33'**) dazu bestimmt, den Endlosliner (**4**) temporär gegenüber der Röhre (**32**) abzudichten; und
g) optional einen ersten Rohrstutzen (**37**) und einen zweiten Rohrstutzen (**370**), die vorzugsweise an der Oberseite angeordnet sind und dem Ausblasen des Innenraums der nächsten Anlagenkomponente (**3**) mittels Luft oder eines Inertgases dienen.

10. Vorrichtung nach Anspruch 9, **dadurch gekennzeichnet, dass** die Dichtung (**33**) stationär positioniert und betätigbar ist, mittels der sich der Endlosliner (**4**) zirkulär gegen die Aussenwandung der Röhre (**32**) dichtend anpressen lässt.

11. Vorrichtung nach Anspruch 10, **dadurch gekennzeichnet, dass** die Dichtung (**33**) als Blähdichtung ausgebildet ist.

12. Vorrichtung nach Anspruch 9, **dadurch gekennzeichnet, dass** die Dichtung (**33'**) ortsbeweglich positioniert ist, mittels der sich der Endlosliner (**4**) zirkulär gegen die Röhre (**32**) dichtend anpressen lässt.

13. Vorrichtung nach Anspruch 12, **dadurch gekennzeichnet, dass**
a) die Dichtung (**33'**) an einem ortsbeweglichen Adapterflansch (**311**) positioniert ist;
b) die Röhre (**32**) eine zur Dichtung (**33'**) komplementäre Dichtkante (**314**) hat, um bei daran angedrückter Dichtung (**33'**) zwischen sich den Endlosliner (**4**) abgedichtet einzuklemmen; und
c) zum Umfassen des äusseren Übergangsbereichs zwischen Dichtkante (**314**) und angefügter Dichtung (**33'**) ein Zentrierring (**313**) vorgesehen sein kann, der auf dem Adapterflansch (**311**) lösbar sitzt.
